Europäisches Patentamt

European Patent Office

Office européen des brevets

(19)

(11) EP 0 708 544 A1

(12) **DEMANDE DE BREVET EUROPEEN**

(43) Date de publication:
**24.04.1996 Bulletin 1996/17**

(51) Int Cl.⁶: **H04L 25/03**

(21) Numéro de dépôt: **95402290.1**

(22) Date de dépôt: **13.10.1995**

(84) Etats contractants désignés:
**AT BE CH DE DK ES GB IT LI NL SE**

(30) Priorité: **17.10.1994 FR 9412353**

(71) Demandeur: **ALCATEL MOBILE
COMMUNICATION FRANCE
F-75008 Paris (FR)**

(72) Inventeur: **Chiodini, Alain
F-92100 Boulogne (FR)**

(74) Mandataire: **El Manouni, Josiane et al
SOSPI
14-16, rue de la Baume
F-75008 Paris (FR)**

(54) **Dispositif de reconnaissance d'informations portées par un signal reçu**

(57) Dispositif de reconnaissance d'informations dans un signal reçu, lesdites informations étant représentées, suivant une convention utilisée à l'émission, par des formes élémentaires possibles de signal à émettre, caractérisé en ce qu'il comporte :

- des moyens (1) dits de corrélation pour effectuer une corrélation entre le signal reçu et diverses formes de signal possibles, suivant ladite convention,

- un réseau de neurones (2) opérant à partir des coefficients de corrélation issus desdits moyens de corrélation, l'apprentissage de ce réseau ayant été réalisé en lui appliquant, en entrée, des coefficients de corrélation correspondant à un signal reçu porteur d'informations données, tout en lui imposant en sortie lesdites informations données, et ce réseau fournissant des informations dites reconnues.

FIG.1

## Description

La présente invention concerne un dispositif de reconnaissance d'informations portées par un signal reçu à travers un canal de transmission, et donc susceptible d'être affecté de distorsions et/ou de perturbations du fait même de sa transmission à travers ce canal.

La présente invention est applicable au cas d'informations de nature numérique, c'est-à-dire représentées, suivant une convention donnée utilisée à l'émission, par des formes élémentaires possibles de signal à émettre, chacune de ces formes élémentaires étant définie pour une durée égale à celle d'un symbole d'information.

La présente invention est notamment applicable à la démodulation de signaux modulés suivant une modulation discrète (telle que notamment une modulation du type FSK, MSK, ou encore GMSK), reçus par un canal de transmission radioélectrique, notamment un canal radiomobile.

La présente invention est ainsi notamment applicable à la réception de signaux transmis dans un système de radiocommunications avec des mobiles du type GSM (Groupe Spécial Mobile).

On rappelle qu'un signal reçu après transmission par un canal radioélectrique apparaît dégradé en raison des phénomènes suivants :

- l'atténuation variable, due à la perte d'espace libre (dépendant de la distance séparant l'émetteur du récepteur) et à la présence d'obstacles le long du trajet (collines, bâtiments, végétation, etc...),
- les multitrajets, causés par la réflexion ou par la diffraction du signal émis par différents obstacles,
- l'addition de bruit (tel que le bruit thermique), d'émissions parasites ou d'interférences dues à d'autres utilisateurs partageant des ressources identiques (interférences dites co-canal) ou voisines (interférences avec un canal adjacent).

Il est connu (voir par exemple pages 256-258 du livre de Michel MOULY et Marie-Bernadette PAUTET : "The GSM Sytem for Mobile Communications") de réaliser une telle démodulation en utilisant l'algorithme dit de Viterbi. Cet algorithme permet de reconstituer la séquence de symboles émise la plus vraisemblable en faisant un certain nombre d'hypothèses sur les signaux possibles et sur les caractéristiques du bruit.

La présente invention a pour objet un dispositif de reconnaissance d'informations portées par un signal reçu, applicable notamment à la démodulation de signaux porteurs d'informations numériques reçus par un canal de transmission radioélectrique, notamment un canal radiomobile, ce dispositif étant basé sur une technique différente, permettant notamment de s'affranchir de telles hypothèses.

La présente invention utilise la technique connue des réseaux de neurones. La présente invention vise essentiellement à appliquer à un réseau de neurones, utilisé pour la reconnaissance d'informations portées par un signal reçu, non pas le signal reçu lui-même, mais des paramètres obtenus à partir de ce signal, qui soient les plus pertinents possibles au regard de la tâche à accomplir par ce réseau et qui permettent ainsi notamment de réduire la complexité de ce réseau et/ou d'accroître la qualité de ladite reconnaissance.

Par ailleurs, selon les recommandations GSM, le démodulateur doit pouvoir traiter un signal dans le cas de deux multi-trajets d'égales puissances et espacés dans le temps de 16 µs. Cette situation est considérée comme extrême en raison du niveau d'interférence inter-symbole généré et dans ce cas une égalisation est préalablement requise, cette égalisation nécessitant l'estimation de la réponse impulsionnelle du canal de transmision.

Un autre aspect de l'invention réside dans une simplification due au fait que les deux opérations d'égalisation et de démodulation habituellement réalisées de façon distincte et successive, notamment dans un récepteur GSM, peuvent être ici réalisées en une seule et même opération, et au fait que l'estimation de la réponse impulsionnelle du canal de transmission, habituellement requise pour réaliser ladite opération d'égalisation, n'est plus ici nécessaire.

En outre il est également connu qu'un récepteur de signaux modulés suivant une modulation de phase (notamment un récepteur GSM) nécessite deux voies dites en quadrature (I et Q) pour pouvoir effectuer une démodulation de ces signaux. Un autre aspect de l'invention réside dans une autre simplification due au fait qu'une seule des deux voies dites en quadrature (I et Q) habituellement requises dans un démodulateur de signaux modulés suivant une modulation de phase (ce qui est notamment le cas dans le système GSM mentionné plus haut) est ici nécessaire, ceci n'empêchant cependant pas que deux telles voies en quadrature puissent être utilisées, notamment pour mettre en oeuvre une forme de diversité en réception.

La présente invention a ainsi pour objet un dispositif de reconnaissance d'informations portées par un signal reçu, lesdites informations étant représentées, suivant une convention utilisée à l'émission, par des formes élémentaires possibles de signal à émettre, ce dispositif étant essentiellement caractérisé en ce qu'il comporte :

- des moyens dits de corrélation pour effectuer une corrélation entre le signal reçu et diverses formes de signal possibles, suivant ladite convention,
- un réseau de neurones opérant à partir des coefficients de corrélation issus desdits moyens de corrélation, l'apprentissage de ce réseau ayant été réalisé en lui appliquant, en entrée, des coefficients de corrélation correspondant à un signal reçu porteur d'informations données, tout en lui imposant en sortie lesdites informations données, et ce réseau fournissant des informations dites reconnues.

D'autres objets et caractéristiques de la présente invention apparaîtront à la lecture de la description suivante d'un exemple de réalisation, ladite description étant faite en relation avec les dessins ci-annexés dans lesquels :

- la figure 1 illustre un exemple de dispositif de reconnaissance d'informations portées par un signal reçu, suivant l'invention,
- la figure 2 est un schéma destiné à illustrer une méthode d'apprentissage possible d'un réseau de neurones dans un dispositif suivant l'invention; pour simplifier, les éléments communs aux figures 1 et 2 portent les mêmes références.

La présente invention utilise donc la technique des réseaux de neurones. On rappelle qu'un réseau de neurones est constitué par l'assemblage d'un certain nombre d'éléments appelés neurones formels. Le neurone formel constitue l'unité élémentaire de traitement de l'information et sa structure est inspirée par celle des neurones biologiques. Il possède un certain nombre d'entrées $x_i$ affectées chacune d'un coefficient de pondération $w_i$ (appelé aussi poids synaptique). Les valeurs appliquées sur les entrées sont soit directes (venant de l'extérieur), soit issues des sorties d'autres neurones. Le neurone effectue la somme pondérée des entrées par les poids synaptiques correspondants :

$$e_j = \sum_{i=1}^{N} w_{i,j} x_i$$

La sortie est calculée en appliquant à la valeur ainsi obtenue une fonction de seuil (échelon ou fonction sigmoïde):

$$S_j = f(e_j)$$

Les réseaux de neurones sont constitués par l'association de plusieurs neurones formels. Les liaisons entre les neurones définissent la topologie du réseau.

L'ensemble des architectures qu'il est possible de concevoir présente une variété infinie.

On peut cependant définir deux types extrêmes :

- le réseau est totalement interconnecté : la sortie de chaque neurone active tous les autres neurones; le réseau est dit récursif.
- le réseau est disposé en couches successives; il n'y a pas de rétro-action contrairement au cas précédent. On peut distinguer une couche d'entrée qui reçoit les signaux de l'extérieur et une couche de sortie qui délivre la réponse du réseau. On peut trouver entre ces deux couches plusieurs couches intermédiaires intercalées.

Le principe d'utilisation d'un réseau de neurones est de présenter un ensemble de valeurs à l'entrée et d'observer le résultat en sortie. Le temps de transit de l'information à travers le réseau est très bref, surtout dans le cas des réseaux multi-couches.

Les caractéristiques principales de l'approche neuronale sont :

- un parallélisme intrinsèque : les neurones calculent leur état simultanément ce qui entraîne une puissance de traitement très importante,
- une forte connectivité : la densité des liaisons entre neurones est très forte,
- une grande robustesse : la connaissance caractérisant l'application étant répartie dans l'ensemble des poids synaptiques lors du processus d'apprentissage, la défaillance ultérieure d'un ou de plusieurs neurones n'entraîne pas la défaillance du système,
- une faculté d'apprentissage : la détermination des poids synaptiques est effectuée grâce à un mécanisme d'apprentissage au cours duquel on présente successivement à l'entrée du réseau des jeux de valeurs tout en imposant à la sortie la réponse que l'on souhaite obtenir. Un algorithme connu sous le nom de rétro-propagation du gradient permet alors d'ajuster les coefficients synaptiques en partant des couches de sortie jusqu'à la couche d'entrée.

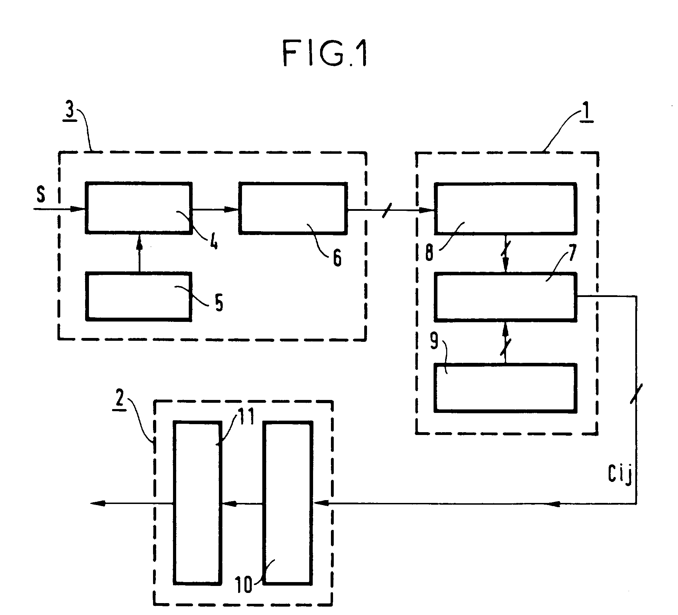

Le dispositif de reconnaissance d'informations illustré sur la figure 1 est à titre d'exemple utilisé pour la démodulation d'un signal porteur d'informations numériques reçu d'un canal radiomobile, dans un système de radiocommunication avec des mobiles, du type GSM. On rappelle que le type de modulation utilisé dans le système GSM est une modulation GMSK ("Gaussian Minimum Shift Keing).

Le dispositif illustré sur la figure 1 opère sur un signal, noté S, qui est un signal transposé en fréquence, obtenu en sortie de l'une de deux voies dites en quadrature (I et Q) d'un premier étage de réception non représenté car ne faisant pas partie de la présente invention.

Ce dispositif comporte essentiellement :

- des moyens dits de corrélation, 1, pour effectuer une corrélation entre le signal reçu et diverses formes possibles (préalablement enregistrées) de signal reçu sur une durée égale à n symboles d'information,
- un réseau de neurones, 2, opérant sur les coefficients de corrélation issus des moyens 1.

Les moyens de corrélation 1 opèrent en l'occurrence sur des échantillons numériques obtenus après passage du signal S dans des moyens 3 de conversion analogique-numérique.

Ces moyens 3 de conversion analogique-numérique comportent :

- un échantillonneur-bloqueur 4, recevant un signal d'horloge de fréquence $f_e$ issu d'une horloge, 5,

- un convertisseur analogique-numérique proprement dit, 6, opérant sur les échantillons issus de l'échantillonneur-bloqueur 4.

Le système GSM considéré à titre d'exemple étant du type dit à accès multiple par répartition dans le temps, ce dispositif de reconnaissance traite en l'occurrence le signal reçu paquet par paquet, chaque paquet (ou "burst" en anglo-saxon) comportant une séquence de symboles d'information transmise dans l'un des intervalles de temps d'une structure de multiplex temporel caractéristique de ce système.

Le calcul de coefficients de corrélation par les moyens 1 s'opère, dans l'exemple considéré, au moyen d'un corrélateur 7, en appliquant aux échantillons formant un paquet de signal reçu, mémorisés dans une mémoire-tampon 8, une fenêtre glissante de largeur égale à n symboles d'information et en calculant, pour chacune des I positions de cette fenêtre glissante, et pour chacune des J formes possibles considérées de signal reçu sur une durée égale à n symboles d'information (ces formes possibles étant mémorisées dans une mémoire 9), le coefficient d'intercorrélation Cij correspondant (avec i variant entre 1 et I et j variant entre 1 et J).

L'ensemble des coefficients d'intercorrélation Cij obtenus dans cet exemple pour un paquet peut être rangé suivant une matrice rectangulaire de dimensions J lignes sur I colonnes.

On rappelle qu'un paquet dit de trafic comporte, suivant le système GSM, 148 symboles d'information, ou bits, se décomposant en cinq champs :

- l'en-tête : 3 bits fixes (0 0 0)
- la première moitié de la séquence d'information à transmettre : 58 bits (de valeurs 0 ou 1),
- la séquence d'apprentissage : 26 bits (8 séquences possibles),
- la seconde moitié de la séquence d'information à transmettre : 58 bits (de valeur 0 ou 1),
- l'appendice : 3 bits fixes (0 0 0) .

Les 3 bits situés en début et en fin de paquet sont prévus pour éviter une perte d'efficacité du démodulateur lorsqu'il traite les bits d'information situés aux extrémités du paquet.

Dans l'exemple considéré, l'observation d'un tel paquet à travers une fenêtre glissante de largeur n bits révèle un nombre I de n-uplets égal à 149-n.

D'une façon générale, la valeur n sera choisie en tenant compte d'un compromis entre :

- une plus grande précision, obtenue par une augmentation de la valeur n, le cas limite étant dans l'exemple considéré représenté par une valeur de n égale à 148, auquel cas on peut en effet trouver précisément celle des J formes possibles considérées de signal reçu qui se rapproche le plus de la forme du signal effectivement reçu pour le paquet de 148 bits considéré,

- une plus grande simplicité de réalisation, obtenue par une diminution de la valeur n, qui entraîne en effet une diminution du nombre de formes possibles de signal reçu sur une durée égale à n symboles d'information.

Dans le cas où n est ainsi choisi inférieur à la valeur 148, l'ensemble des n-uplets observés présente cependant un caractère redondant permettant une représentation significative du paquet.

A titre d'exemple, n pourra ici être choisi compris entre les valeurs 2 et 5 incluses.

En outre, la séquence de symboles d'information associée à un paquet de trafic commençant et se terminant obligatoirement par 3 bits égaux à 0, le motif d'analyse le plus approprié pourra être le quadruplet (soit n=4), l'observation d'un paquet révélant alors 145 quadruplets.

Par ailleurs, un suréchantillonnage par les moyens de conversion analogique-numérique 3 permet également d'accroître la précision. La fréquence d'échantillonnage est alors égale à N fois (avec à titre d'exemple N = 6) la fréquence symbole, ou débit, des informations numériques portées par le signal S, cette fréquence symbole étant, dans le système GSM, égale à 270.833 kHz.

L'ensemble des coefficients d'intercorrélation Cij obtenus pour un paquet peut alors être rangé suivant une matrice rectangulaire de dimension J lignes sur N x 145 colonnes.

Dans le cas d'une modulation telle que la modulation GMSK, qui est une modulation avec mémoire, c'est-à-dire dans laquelle la forme (en l'occurrence la phase) du signal sur une période-symbole dépend non seulement de la valeur du symbole d'information sur cette période-symbole, mais également de la valeur de symboles d'information sur des périodes-symbole précédentes, le nombre total de formes possibles du signal reçu sur une durée égale à n symboles d'information est supérieur à $2^n$, alors que dans le cas d'une modulation autre qu'une modulation à mémoire, par exemple une modulation FSK, il est égal à $2^n$.

Dans le cas d'une modulation avec mémoire et notamment dans le cas considéré ici d'une modulation GMSK, le nombre J de formes possibles considérées pourra cependant être choisi égal à $2^n$ en considérant chacune des formes de signal possibles obtenues :

- en appliquant une modulation GMSK à l'une des $2^n$ séquences possibles obtenues avec n symboles, précédée par des symboles ayant même valeur que le premier symbole de cette séquence, et suivie par des symboles ayant même valeur que le dernier symbole de cette séquence,
- puis en isolant la portion du signal modulé ainsi obtenu qui correspond à ces n symboles.

Ceci permet de simplifier la réalisation, dans le cas où le nombre total de formes possibles atteindrait des valeurs trop importantes.

Dans ce cas, et dans l'exemple numérique considéré ici, la matrice de coefficients de corrélation devient alors une matrice de dimensions $2^4$, soit 16 lignes, sur 6 x 145, soit 870 colonnes.

Compte tenu de la fréquence d'échantillonnage utilisée (6 fois le débit dans l'exemple considéré) cette matrice peut aussi être divisée en 145 matrices rectangulaires de dimensions 16 x 6.

Dans l'application considérée, l'interférence intersymbole due au canal de transmission peut concerner jusqu'à 5 bits consécutifs. Pour décider de la valeur d'un bit, le réseau de neurones 2 doit donc comporter une entrée matricielle correspondant à 5 sous-matrices (16, 6) consécutives constituant une matrice (16, 30).

Eventuellement, on peut procéder à une décimation des sous-matrices en ne retenant qu'une colonne sur 6. On aboutit ainsi à un réseau plus simple dont l'entrée est une matrice (16, 5). La matrice principale devient une matrice de dimensions (16, 145) à laquelle une fenêtre glissante de dimension (16, 5) est appliquée pour démoduler les 145 bits constituant le paquet.

A titre d'exemple, le réseau de neurones 2 est un réseau à deux couches, notées respectivement 10 et 11. L'apprentissage de ce réseau est effectué suivant des techniques connues, tel que rappelé plus haut.

Dans l'exemple d'application à la reconnaissance d'informations portées par un signal reçu après transmission par un canal de transmission radioélectrique, la configuration mise en place pour réaliser un tel apprentissage consistera par exemple, à partir d'informations données émises, à faire des mesures ou à simuler le comportement du canal radioélectrique afin d'obtenir un signal reçu correspondant, à calculer les coefficients de corrélation pour ce signal, et à présenter à l'entrée de ce réseau les coefficients de corrélation ainsi obtenus, tout en imposant à la sortie de ce réseau la réponse que l'on souhaite obtenir, à savoir lesdites informations émises données.

Une autre méthode, applicable au cas où une séquence d'apprentissage est insérée dans les informations transmises (correspondant notamment au cas du système GSM) consiste à utiliser une telle séquence d'apprentissage pour réaliser un apprentissage permanent et adaptatif du réseau de neurones.

Cette séquence d'apprentissage étant connue du récepteur, elle constitue alors la réponse à imposer en sortie du réseau, en tant que réponse que l'on souhaite obtenir, pour la portion du signal modulé reçue correspondante, et donc pour les coefficients de corrélation correspondants, appliqués alors en entrée de ce réseau.

L'apprentissage adaptatif du réseau au moyen de la séquence d'apprentissage pourra être fait, soit après démodulation des portions de signal modulé reçu correspondant aux deux moitiés de séquence d'information entourant une séquence d'apprentissage (et donc pendant la période séparant la réception de deux paquets successifs dans le cas d'un système à accès multiple par répartition temporelle) soit, pour une meilleure qualité de démodulation, avant démodulation de ces deux portions de signal (à condition de les avoir préalablement mémorisées).

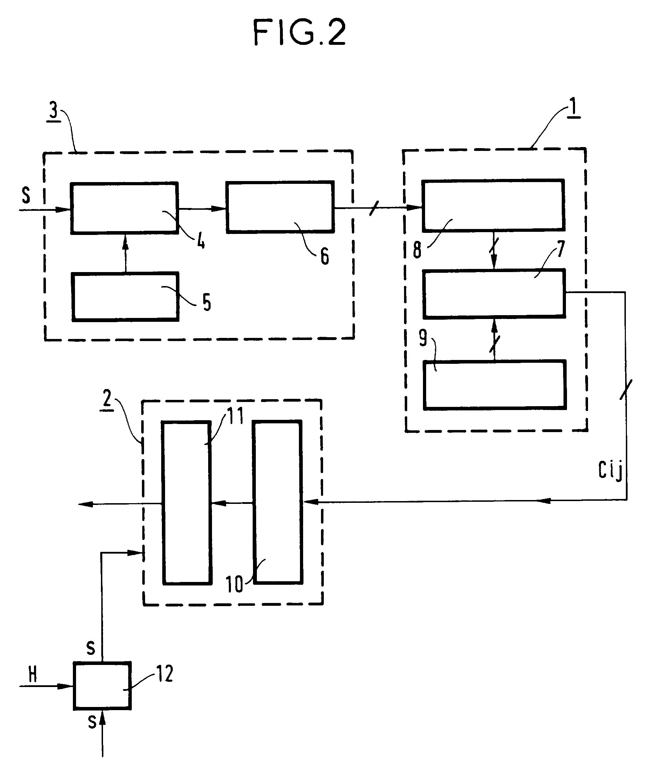

Une telle méthode d'apprentissage est illustrée sur la figure 2, où l'on voit des moyens dits d'apprentissage, 12, permettant, lorsque les coefficients de corrélation issus des moyens 1 se rapportent aux emplacements temporels occupés par la séquence d'apprentissage dans le signal reçu, d'imposer cette séquence d'apprentissage, notée s, en sortie du réseau de neurones 2. Ces moyens 12 sont pour cela commandés par des signaux d'horloge notés H indiquant ces emplacements temporels.

On notera que le rôle de la séquence d'apprentissage suivant cette méthode est différent de ce qu'il est dans les systèmes antérieurs, où cette séquence d'apprentissage sert en effet à estimer la réponse impulsionnelle du canal de transmission, comme rappelé plus haut.

## Revendications

1. Dispositif de reconnaissance d'informations portées par un signal reçu, lesdites informations étant représentées, suivant une convention donnée utilisée à l'émission, par des formes élémentaires possibles de signal à émettre, caractérisé en ce qu'il comporte :

   - des moyens (1) dits de corrélation pour effectuer une corrélation entre le signal reçu et diverses formes de signal possibles, suivant ladite convention,
   - un réseau de neurones (2) opérant à partir des coefficients de corrélation issus desdits moyens de corrélation, l'apprentissage de ce réseau ayant été réalisé en lui appliquant, en entrée, des coefficients de corrélation correspondant à un signal reçu porteur d'informations données, tout en lui imposant en sortie lesdites informations données, et ce réseau fournissant des informations dites reconnues.

2. Dispositif selon la revendication (1), caractérisé en ce que, une séquence d'apprentissage étant insérée dans lesdites informations, il comporte des moyens (12) pour réaliser un apprentissage permanent et adaptatif du réseau de neurones au moyen de ladite séquence d'apprentissage.

3. Dispositif selon l'une des revendications 1 et 2, utilisé pour la démodulation de signaux modulés suivant une modulation dite avec mémoire, notamment suivant une modulation dite GMSK, caractérisé en ce que chacune desdites diverses formes de signal possibles, sur une durée égale à n symboles d'information, est obtenue en appliquant ladite modulation à l'une des $2^n$ séquences possibles obtenues avec n symboles, précédée par des symboles ayant même valeur que le premier symbole de cette séquence et suivie par des symboles ayant même valeur que le dernier symbole de cette séquence, puis en isolant la portion du signal modulé ainsi obtenu qui correspond à ces n symboles.

# FIG.1

EP 0 708 544 A1

# FIG.2

**Office européen des brevets**

# RAPPORT DE RECHERCHE EUROPEENNE

Numero de la demande

EP 95 40 2290

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE TRANSACTIONS ON COMMUNICATIONS, vol. 40, no. 8, pages 1396-1408, GUSTAVO DE VECIANA ET AL 'NEURAL NET-BASED CONTINUOUS PHASE MODULATION RECEIVERS' * abrégé; figure 5 * | 1,3 | H04L25/03 |
| A | IEEE INTERNATIONAL CONFERENCE ON COMMUNICATIONS 1993, 23 - 26 Mai 1993 GENEVA, CH, pages 1134-1138, GIRIDHAR ET AL. 'Reduced complexity MAPSD algorithms with spatial diversity for TDMA mobile radio signal recovery' * abrégé; figures 1-3 * | 1,3 | |
| A | IEEE TRANSACTIONS ON NEURAL NETWORKS, vol. 4, no. 3, pages 484-494, JOONGHO CHOI ET AL 'A PROGRAMMABLE ANALOG VLSI NEURAL NETWORK PROCESSOR FOR COMMUNICATION RECEIVERS' * abrégé; figure 1 * | 1 | **DOMAINES TECHNIQUES RECHERCHES (Int.Cl.6)** H04L |

Le présent rapport a été établi pour toutes les revendications

| Lieu de la recherche | Date d'achèvement de la recherche | Examinateur |
|---|---|---|
| LA HAYE | 29 Janvier 1996 | Scriven, P |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)